Europäisches Patentamt

European Patent Office

Office européen des brevets

(11) Veröffentlichungsnummer: **0 285 689**
**A1**

## (12) EUROPÄISCHE PATENTANMELDUNG

(21) Anmeldenummer: 87105160.3

(22) Anmeldetag: 08.04.87

(51) Int. Cl.4 **G01G 19/12 , G01G 19/03 , G01G 9/00**

Geänderte Patentansprüche gemäss Regel 86 (2) EPÜ.

(43) Veröffentlichungstag der Anmeldung:
**12.10.88 Patentblatt 88/41**

(84) Benannte Vertragsstaaten:
**DE FR GB NL**

(71) Anmelder: **Kirchberger, Franz**
**Lichtenfelser Strasse 43**
**D-8623 Staffelstein(DE)**

(72) Erfinder: **Kirchberger, Franz**
**Lichtenfelser Strasse 43**
**D-8623 Staffelstein(DE)**

(74) Vertreter: **LOUIS, PÖHLAU, LOHRENTZ &**
**SEGETH**
**Kesslerplatz 1 Postfach 3055**
**D-8500 Nürnberg(DE)**

(54) **Verfahren zur Bestimmung des Gewichts einer von einer landwirtschaftlichen Zugmaschine transportierten Ladung und Vorrichtung zur Durchführung dieses Verfahrens.**

(57) Es wird ein Verfahren und eine Vorrichtung zur Bestimmung des Gewichts einer von einer landwirtschaftlichen Zugmaschine (10) transportierten Ladung (14) beschrieben. Dabei werden entweder durch eine Geschwindigkeits-und eine Zeitmessung die Beschleunigung und bei konstanter Kraft der Zugmaschine ein Vergleich einer Eichladung mit einer zu bestimmenden Ladung,oder mittels einer Kraftmesseinrichtung (36) die Beschleunigungskraft der Zugmaschine (10) in Fahrtrichtung und mittels eines Beschleunigungssensors (38) die Beschleunigung der Zugmaschine (10) in Fahrtrichtung gemessen und aus den Meßdaten die Masse bzw. das Gewicht der Ladung (14) bestimmt.

FIG.1

Die Erfindung betrifft ein Verfahren zur Bestimmung des Gewichts einer von einer landwirtschaftlichen Zugmaschine gezogenen Ladung und eine Vorrichtung zur Durchführung dieses Verfahrens.

Die landwirtschaftliche Pflanzenerzeugung konzentriert sich im wesentlichen auf die Zufuhr von Saat-, Dünge-oder Pflegemitteln auf das Produktionsfeld. bzw. auf die Abfuhr des Ernteproduktes. Zur wirtschaftlichen Optimierung der landwirtschaftlichen Pflanzenerzeugung ist es erforderlich, die Materialbewegungen, d.h. die Materialzufuhr sowie die Materialabfuhr zu messen. Diese Messungen, d.h. die Bestimmung des Gewichtes einer von einer landwirtschaftlichen Zugmaschine gezogenen Ladung wird bspw. mittels einer Waage durchgeführt. Befindet sich die Waage an der landwirtschaftlichen Zugmaschine, dann ist eine genaue Gewichtsbestimmung der Ladung nur möglich, wenn die Zugmaschine steht. Das bedeutet jedoch eine unerwünschte Unterbrechung der Materialbewegung. Wird die Gewichtsbestimmung der Ladung bei einer landwirtschaftlichen Zugmaschine während der Transportbewegung durchgeführt, dann ergibt sich der Mangel, daß Erschütterungen das Meßergebnis beeinträchtigen. Aus diesem Grunde erfolgt oftmals eine Erschütterungsdämpfung, die das Meßergebnis jedoch ebenfalls beeinträchtigt.

Der Erfindung liegt deshalb die Aufgabe zugrunde, ein Verfahren der eingangs genannten Art und eine dafür vorgesehene Vorrichtung zu schaffen, wobei eine Bestimmung aller Materialbewegungen zum bzw. vom Arbeitsfeld ohne Unterbrechung der Transportbewegungen möglich ist.

Diese Aufgabe wird erfindungsgemäß dadurch gelöst. daß die Zugmaschine zuerst mit einer Eichladung mit einer definierten Kraft beschleunigt und die Beschleunigung bestimmt wird, daß anschließend die mit der zu transportierenden Ladung versehenen Zugmaschine mit der gleichen definierten Kraft entsprechend beschleunigt und die Beschleunigung bestimmt wird, und daß die Masse der tatsächlichen Ladung durch einen Vergleich der beiden Beschleunigungen bestimmt wird.

Die zur Bestimmung der mit der Eichladung bzw. mit der tatsächlichen Ladung versehenen Zugmaschine erforderliche Kraft wird dadurch festgelegt. daß die Zugmaschine zweckmäßigerweise im oberen Drittel ihrer Nenndrehzahl, d.h. zwischen 2/3 der Nenndrehzahl und der Nenndrehzahl angetrieben wird.

Die beiden Beschleunigungen, d.h. die Beschleunigung der mit der Eichladung versehenen Zugmaschine und die Beschleunigung der mit der tatsächlichen Ladung versehenen Zugmaschine können mit einem Beschleunigungssensor bestimmt werden. Dabei wird vorzugsweise ein Beschleunigungssensor angewandt, der ein elektrisches Ausgangssignal abgibt.

Bei einer anderen Ausbildung des erfindungsgemäßen Verfahrens werden die Beschleunigungen nicht mit einem Beschleunigungssensor sondern mit einer Geschwindigkeitsmeßeinrichtung und einer Zeitmeßeinrichtung gemessen. Derartige Meßeinrichtungen sind einfacher und robuster ausgebildet als Beschleunigungssensoren, so daß mit einer Geschwindigkeits-und einer Zeitmeßeinrichtung eine einfachere Messung möglich ist. Um die Meßwerte der Geschwindigkeits-und der Zeitmeßeinrichtung unmittelbar in einen Rechner eingeben zu können, werden Meßeinrichtungen angewandt, welche elektrische Ausgangssignale abgeben. Wenn es sich bei diesen Ausgangssignalen um Analogsignale handelt, werden diese mittels eines Analog/Digital-Wandlers in digitale Signale umgewandelt, die ohne weiters im Rechner verarbeitet werden können. Aus diesen Signalen wird im Rechner die entsprechende Beschleunigung errechnet.

Es hat sich als vorteilhaft erwiesen. daß zur Eichung bei gleichzeitiger Berücksichtigung der Reibungseinflüsse der Zugmaschine die mit einer genau definierten Eichladung versehene Zugmaschine zuerst bei einer vorgegebenen Anfangsgeschwindigkeit ($v_{EO}$) am Anfang einer Wegstrecke ($s_{EZ}$) ausgekuppelt wird, so daß sich infolge der Reibungseinflüsse eine Geschwindigkeitsabnahme auf eine untere Grenzegeschwindigkeit, d.h. eine Verzögerung ($b_{ER}$) ergibt, die aus der Differenz zwischen der Anfangsgeschwindigkeit ($v_{EO}$) und der unteren Grenzgeschwindigkeit und der Zeitspanne zwischen diesen beiden Geschwindigkeiten bestimmt wird, daß bei Erreichen der unteren Grenzgeschwindigkeit wieder eingekuppelt und das Gaspedal zum Beschleunigen der Zugmaschine auf Vollgas gestellt wird, daß die Zeit ($t_{EZ}$) bis zum Ende der Wegstrecke ($s_{EZ}$) bzw. bis zum Erreichen einer vorgegebenen Endgeschwindigkeit bestimmt wird, daß nach der Formel

$$K = \left[ \frac{2 \cdot (s_{EZ} - v_{EO} \cdot t_{EZ})}{t_{EZ}^2} + b_{ER} \right] \cdot m$$

die zum Beschleunigen der Zugmaschine erforderliche Kraft berechnet wird, daß mit der zu bestimmenden tatsächlichen Ladung anschließend die gleichen Verfahrensschritte durchgeführt werden wie mit der genau definierten Eichladung (m), und daß die Masse (M) der tatsächlichen Ladung nach der Formel

2

$$M = \frac{K \cdot t_{MZ}{}^2}{2 \cdot (s_{MZ} - v_{MO} \cdot t_{MZ}) + b_{MR} \cdot t_{MZ}{}^2}$$

bestimmt wird, mit

$K$ = Kraft der mit der Eichladung versehenen Zugmaschine in einem bestimmten Drehzahlbereich ($2.3.n$ bis $n$);

$t_{MZ}$ = Zeit zum Durchlaufen der Wegstrecke $s_{MZ}$ mit der tatsächlichen Ladung;

$s_{MZ}$ = Wegstrecke mit der tatsächlichen Ladung;

$v_{MO}$ = Anfangsgeschwindigkeit mit der tatsächlichen Ladung; und

$b_{MR}$ = Bremsverzögerung mit der tatsächlichen Ladung.

Durch die Bestimmung der Anfangsgeschwindigkeit $v_{EO}$ und der unteren Grenzgeschwindigkeit mit dem Geschwindigkeitssensor, und der Zeitspanne zwischen diesen beiden Geschwindigkeiten kann die Bremsverzögerung $b_{ER}$ der mit der Eichladung versehenen Zugmaschine bestimmt werden.

Durch Bestimmung der Zeit $t_{EZ}$ zum Durchlaufen der Wegstrecke $s_{EZ}$ ist es im Kenntnis der Eichladung $m$ möglich, mittels des Rechners nach der oben angegebenen Formel für $K$ die Beschleunigungskraft $K$ der Zugmaschine zu berechnen.

Sobald diese sogen. Eichkraft $K$ berechnet worden ist, ist es bei der mit der tatsächlichen Ladung versehenen Zugmaschine dann möglich, durch Bestimmung der Bremsverzögerung $b_{MR}$ aus der Anfangsgeschwindigkeit $v_{MO}$ und der unteren Grenzgeschwindigkeit und der Zeitspanne zwischen diesen beiden Geschwindigkeiten, sowie aus der Zeit $t_{MZ}$ welche die mit der tatsächlichen Ladung versehene Zugmaschine benötigt, um die Wegstrecke $s_{MZ}$ zurückzulegen, die tatsächliche Ladung $M$ der Zugmaschine nach der oben genannten Formel für $M$ mittels eines Rechners zu bestimmen.

Mit dem erfindungsgemäßen Verfahren ist es somit möglich, die tatsächliche Ladung einer Zugmaschine während der Transportbewegungen der Zugmaschine festzustellen.

Ein weiterer Vorteil besteht darin, dass eine Gewichtsbestimmung ohne zusätzlichen technischen Aufwand möglich ist, weil keine speziellen Waagen, bzw. keine anderen Messeinrichtungen als ein Wegstreckenaufnehmer, eine Geschwindigkeitsmesseinrichtung und eine Uhr erforderlich sind. Mit dem erfindungsgemässen Verfahren ergeben sich zuverlässige stabile und reproduzierbare Messergebnisse.

Die Mindestgeschwindigkeit der mit der Eichladung bzw. der tatsächlichen Ladung beladenen Zugmaschine kann bei 70 % und die Endgeschwindigkeit bei 130 % der Anfangsgeschwindigkeit gewählt werden. Selbstverständlich kann dieser Geschwindigkeitsbereich auch grösser oder kleiner sein.

Die erfindungsgemässe Aufgabe kann auch dadurch gelöst werden, dass mittels einer Kraftmesseinrichtung die Beschleunigungskraft und mittels eines Beschleunigungssensors die Beschleunigung der mit einer Eichladung versehenen Zugmaschine in Fahrtrichtung und anschliessend mittels der Kraftmesseinrichtung die Beschleunigungskraft und mittels des Beschleunigungssensors die Beschleunigung der mit der zu bestimmenden Ladung versehenen Zugmaschine in Fahrtrichtung gemessen wird.Durch die Messung der Beschleunigungskraft und der Beschleunigung ist es möglich, die von einer landwirtschaftlichen Zugmaschine transportierte Ladung während der Fahrt, d.h. während des Transportes der Ladung zu bestimmen. Das ist insbesondere zum genauen, quasi kontinuierlichen Anlegen von Schlagdateien, bzw. zum Vergleich mit einer vorgegebenen Schlagdatei ohne Unterbrechung der Transportbewegung möglich.

Beim erfindungsgemässen Verfahren werden die Beschleunigungskräfte und die Beschleunigungen vorzugsweise entlang einer bestimmten Wegstrecke gemessen. Die Messung dieser Wegstrecke ist beispielsweise mittels optischer oder induktiver Wegaufnehmer , mittels berührungsloser Radar-Wegstreckenaufnehmer oder anderer bekannter Wegstrecken-Messeinrichtungen möglich. Die induktive Wegstrecken-Messeinrichtung kann beispielsweise am Antriebsstrang der landwirtschaftlichen Zugmaschine vorgesehen sein.

Es hat sich als vorteilhaft erwiesen, dass mit einer Geschwindigkeitsmesseinrichtung die Geschwindigkeit am Anfang und die Geschwindigkeit am Ende der Wegstrecke und mit einer Zeitmesseinrichtung die zum Zurücklegen der Meßstrecke erforderliche Zeit mit der Eichladung und mit der zu bestimmenden Ladung gemessen wird, und dass die Masse der zu bestimmenden Ladung mittels eines Rechners nach der Formel

$$M = \frac{K \cdot t^2}{2 \cdot (S - V_0 \cdot t) + b \cdot t^2} - m$$

berechnet wird. In dieser Formel bedeuten:

K = Beschleunigungskraft der mit der zu bestimmenden Ladung versehenen Zugmaschine,
s = Wegstrecke,
t = Zeit zum Zurücklegen der Wegstrecke s,
$V_0$ = Geschwindigkeit am Anfang der Wegstrecke,
b = Beschleunigung der mit der zu bestimmenden Ladung versehenen Zugmaschine in Fahrtrichtung, und
m = Leermasse der Zugmaschine.

Bei der Geschwindigkeitsmesseinrichtung kann es sich um eine an sich bekannte Einrichtung handeln, wie sie von Landfahrzeugen allgemein bekannt ist. Bei der Zeitmesseinrichtung kann es sich um einen sog. Timer handeln, der in einem Bordcomputer der landwirtschaftlichen Zugmaschine vorgesehen ist.

Zur Durchführung des erfindungsgemässen Verfahrens hat es sich als vorteilhaft erwiesen, dass während eines ersten Teilabschnittes der Wegstrecke die Anfangsgeschwindigkeit und die Endgeschwindigkeit der Zugmaschine gemessen wird,wobei der Antrieb der Zugmaschine mittels einer ersten Schalteinrichtung unwirksam gemacht wird, und dass am Ende des ersten Teilabschnittes der Wegstrecke der Antrieb der Zugmaschine aktiviert und gleichzeitig eine zweite Schalteinrichtung betätigt wird, mit der der Beschleunigungssensor zur Messung der Beschleunigung der landwirtschaftlichen Zugmaschine mit der zu transportierenden Ladung ausgelöst wird. Bei dieser ersten Schalteinrichtung handelt es sich insbesondere um eine mit dem Kupplungspedal der Zugmaschine zusammenwirkende Schalteinrichtung. Die zweite Schalteinrichtung ist derart ausgebildet, dass sie mit dem Gaspedal der Zugmaschine zusammen wirken kann. Die Wegstrecke wird üblicherweise auf einer ebenen oder ansteigenden Strecke definiert, so dass die Endgeschwindigkeit kleiner ist als die Anfangsgeschwindigkeit.Während des ersten Teilabschnittes der Meßstrecke ergibt sich somit eine negative Beschleunigung, d.h. eine Verzögerung. Am Ende des ersten Teilabschnittes der Meßstrecke wird der Antrieb der Zugmaschine aktiviert, d.h. das Kupplungspedal losgelassen, so dass die erste Schalteinrichtung in ihre inaktive Stellung zurückkehrt, und gleichzeitig wird das Gaspedal derart betätigt, dass die Zugmaschine in Fahrtrichtung beschleunigt wird. Gleichzeitig wird beim Betätigen des Gaspedals die zweiteSchalteinrichtung in ihre aktive Stellung gestellt, in der der Beschleunigungssensor zur Messung der Beschleunigung der Zugmaschine in Fahrtrichtung ausgelöst wird. Die Endgeschwindigkeit am Ende des ersten Teilabschnittes sowie am Ende des zweiten Teilabschnittes kann jeweils auf einen bestimmten Wert festgelegt werden. Es hat sich als vorteilhaft erwiesen, die Geschwindigkeit am Ende des ersten Teilabschnittes der Wegstrecke auf 70% der Anfangsgeschwindigkeit der Wegstrecke festzulegen und die Endgeschwindigkeit am Ende der zweiten Teilstrecke, d.h. am Ende der Wegstrecke auf 130% der Anfangsgeschwindigkeit am Anfang der Meßstrecke zu definieren.

Als vorteilhaft hat es sich erwiesen, dass beim erfindungsgemässen Verfahren die Ladung der Zugmaschine mit dem Rechner während der Arbeitsbewegung der Zugmaschine bestimmt wird. Auf diese Weise sind Unterbrechungen der Arbeitsbewegung der Zugmaschine nicht erforderlich. Ein weiterer Vorteil besteht darin,dass die Materialbewegungen während der Fahrt der Zugmaschine quasi kontinuierlich und genau bestimmt bzw. im Bedarfsfall mit vorgegebenen Werten einer angelegten Schlagdatei verglichen und gegebenenfalls korrigiert werden können.

Der errechnete Wert der Ladung der Zugmaschine wird vorzugsweise in einer Speichereinrichtung abgespeichert Mit Hilfe dieser Speichereinrichtung ist es nach Durchführung der mit der Zugmaschine ausgeführten Arbeiten möglich, gegebenenfalls eine Schlagdatei anzulegen.

Der errechnete Wert der Ladung der Zugmaschine kann auch mit einer vorgegebenen Datei verglichen werden. In diesem Fall ist es erforderlichenfalls möglich, die Ladung der Zugmaschine entsprechend der vorgegebenen Datei während der Feldarbeit zu steuern.

Die Vorrichtung zur Durchführung des beschriebenen Verfahrens zur Bestimmung des Gewichtes einer Ladung einer landwirtschaftlichen Zugmaschine ist dadurch gekennzeichnet, dass eine Kraftmesseinrichtung zur Messung der Beschleunigugnskraft in Fahrtrichtung, ein Beschleunigungssensor zur Messung der Beschleunigung der Zugmaschine in Fahrtrichtung und ein Rechner zur Berechnung der Masse der Ladung aus der gemessenen Beschleunigungskraft und der gemessenen Beschleunigung in Fahrtrichtung vorgesehen sind. Bei der Kraftmesseinrichtung kann es sich um eine mindestens ein elastisch federndes Element aufweisende mechanische Einrichtung, eine piezoelektrische oder eine beliebige andere bekannte Kraftmes-

seinrichtung handeln. Der Beschleunigungssensor kann ebenfalls mechanisch oder elektrisch wirksam sein. Beispielsweise sind Dehnungsmeßstreifen einsetzbar, deren elektrischer Widerstand mit Hilfe einer Brückenschal tung in an sich bekannter Weise gemessen und in eine Kraft bzw. Beschleunigung transformiert wird.

Die erfindungsgemässe Vorrichtung kann eine Geschwindigkeitsmesseinrichtung und eine Zeitmesseinrichtung aufweisen, die mit dem Rechner verbunden sind. Mit Hilfe des Rechners ist es möglich, aus den während einer bestimmten Zeitdifferenz gemessenen Geschwindigkeitsdifferenzen die Beschleunigung zu errechnen.

Bei der erfindungsgemässen Vorrichtung ist vorzugsweise eine erste durch das Kupplungspedal der Zugmaschine betätigbare Schalteinrichtung und eine zweite durch das Gaspedal der Zugmaschine betätigbare Schalteinrichtung vorgesehen, wobei die erste und die zweite Schalteinrichtung mit dem Rechner verbunden sind. Durch eine derartige Ausbildung der erfindungsgemässen Vorrichtung ist es automatisch möglich, am Beginn der Meßstrecke durch Auskuppeln des Antriebsmotors der Zugmaschine die erste Schalteinrichtung zu betätigen und mit Hilfe des Geschwindigkeitssensors gleichzeitig automatisch die Anfangsgeschwindigkeit in den Rechner einzugeben. Sobald entlang der Meßstrecke die Geschwindigkeit der Zugmaschine auf einen vorbestimmten Wert absinkt, wird dieser mittels des Geschwindigkeitssensors bestimmte und über den Rechner an eine Anzeigeeinrichtung ausgegebene Geschwindigkeitswert angezeigt, so dass der Lenker der landwirtschaftlichen Zugmaschine den Antriebsmotor wieder einkuppelt und gleichzeitig das Gaspedal zum Beschleunigen der landwirtschaftlichen Zugmaschine durchtritt. Dabei wird die zweite Schalteinrichtung aktiviert, die ebenfalls mit dem Rechner zusammengeschaltet ist. Auf diese Weise kann mit Hilfe des Rechners die Beschleunigung der Zugmaschine, sowie die Zeit zum Zurücklegen der Wegstrecke und die Kraft zum Beschleunigen der Zugmaschine bestimmt werden.Der Rechner errechnet dann nach der Formel

$$M = \frac{K \cdot t^2}{2 \cdot (S - V_0 \cdot t) + b \cdot t^2} - m$$

die Masse der Ladung, die mit der landwirtschaftlichen Zugmaschine transportiert wird.

Der Rechner ist vorzugsweise mit einer Speichereinrichtung versehen. In dieser Speichereinrichtung können die während einer Fahrt entlang des Arbeitsfeldes aufgenommenen Daten, d.h. insbesondere die Abhängigkeit der Ladung von der Wegstrecke der Fahrgassen gespeichert werden. Gegebenenfalls können die im Speicher gespeicherten Daten in einer Schlagdatei ausgedruckt werden.

Der Rechner der erfindungsgemässen Vorrichtung kann mit einem Komparator versehen sein. In den Komparator können die Daten einer vorgegebenen Schlagdatei eingelesen und mit den während der Feldarbeit mittels des Rechners aufgenommenen Daten verglichen werden. Wenn dieser Vergleich zu unzulässigen Abweichungen führt, ist es manuell oder automatisch möglich, die mit der landwirtschaftlichen Zugmaschine transportierte Ladung passend zu steuern.

Weitere Einzelheiten, Merkmale und Vorteile ergeben sich aus der nachfolgenden Beschreibung des in der Zeichnung schematisch dargestellten erfindungsgemässen Verfahrens und der in der Zeichnung - schematisch dargestellten Vorrichtung zur Durchführung dieses Verfahrens. Es zeigen:

Figur 1 eine schematische Darstellung einer landwirtschaftlichen Zugmaschine mit einer Ladung und einer Vorrichtung zur Bestimmung des Gewichtes der Ladung,

Figur 2 eine Diagrammdarstellung der Abhängigkeit der Geschwindigkeit der Zugmaschine in Abhängigkeit von der Weg-bzw. Meßstrecke, und

Figur 3 eine Blockdarstellung der Einzelteile der erfindungsgemässen Vorrichtung.

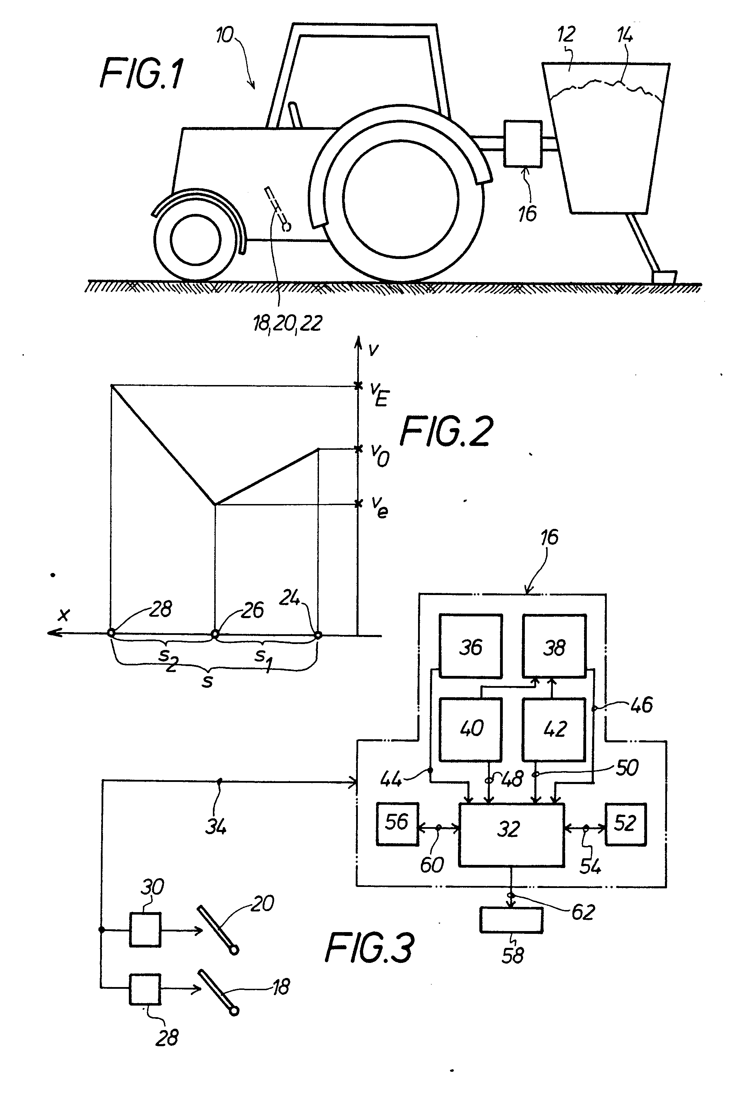

Figur 1 zeigt eine landwirtschaftliche Zugmaschine 10 mit einer Einrichtung 12 zur Aufnahme und zum Transport einer Ladung 14. Die landwirtschaftliche Zugmaschine 10 weist die Masse m auf. Mit der Bezugsziffer 16 ist eine Vorrichtung zur Bestimmung des Gewichts der Ladung 14 bezeichnet, die in dieser Figur schematisch angedeutet ist. Die landwirtschaftliche Zugmaschine 10 weist ein Kupplungspedal 18 und ein Gaspedal 20 sowie ein Bremspedal 22 auf. Die Vorrichtung 16 wird weiter unten in Verbindung mit Figur 3 detailliert beschrieben.

Figur 2 zeigt den Funktionszusammenhang zwischen der Geschwindigkeit v der landwirtschaftlichen Zugmaschine mit einer Wegstrecke x, d.h. insbesondere mit einer Meßstrecke s. Am Anfang der Meßstrecke s.der durch den Punkt 24 bezeichnet ist, weist die landwirtschaftliche Zugmaschine die Anfangsgeschwindigkeit $V_0$ auf. An dem Punkt 24 wird das Kupplungspedal 18 niedergedrückt, so dass die

Kraftübertragung zwischen dem Antriebsmotor und den Antriebsrädern der landwirt schaftlichen Zugmaschine unterbrochen ist. Bei horizontaler oder ansteigender Meßstrecke s nimmt somit die Geschwindigkeit v vom Punkt 24 ausgehend ab. Sobald die Geschwindigkeit v den Wert $v_e$ erreicht hat, wird das Kupplungspedal 18 wieder gelöst und gleichzeitig das Gaspedal 20 niedergedrückt. Vom Punkt 26 der Meßstrecke s, bei dem die Geschwindigkeit v der landwirtschaftlichen Zugmaschine den Wert $v_e$ aufweist, nimmt die Geschwindigkeit der landwirtschaftlichen Zugmaschine bis zum Ende der Meßstrecke s, die durch den Punkt 28 bezeichnet ist, bis zu einem Wert $v_E$ zu.

Figur 3 zeigt in einer schematischen Darstellung das Kupplungspedal 18 und das Gaspedal 20 der landwirtschaftlichen Zugmaschine 10. Mit dem Kupplungspedal 18 wirkt eine erste Schalteinrichtung 28 zusammen. Mit dem Gaspedal 20 wirkt eine zweite Schalteinrichtung 30 zusammen. Die erste und die zweite Schalteinrichtung 28 und 30 sind mit einem in der Vorrichtung 16 vorgesehenen Rechner 32 verbunden. Diese Verbindung ist durch eine Linie 34 angedeutet. Die Vorrichtung 16 weist ausserdem eine Kraftmesseinrichtung 36 zur Messung der Beschleunigungskraft in Fahrtrichtung, einen Beschleunigungssensor 38, eine Geschwindigkeitsmesseinrichtung 40 und eine Zeitmesseinrichtung 42 auf. Die Kraftmesseinrichtung 36 und der Beschleunigungssensor 38 sind mit dem Rechner 32 verbunden. Die Verbindung der Kraftmesseinrichtung 36 mit dem Rechner 32 ist durch die Linie 44 und die Verbindung des Beschleunigungssensors 38 mit dem Rechner 32 ist durch die Linie 46 angedeutet. Die Geschwindigkeitsmesseinrichtung 40 und die Zeitmesseinrichtung 42 sind mit dem Rechner 32 ebenfalls verbunden, was durch die Linie 48 und 50 angedeutet ist. Mit Hilfe des Rechners 32 ist es möglich, aus einer mit der Geschwindigkeitsmesseinrichtung 40 gemessenen Geschwindigkeitsdifferenz und einer mit der Zeitmesseinrichtung 42 gemessenen Zeitdifferenz die entsprechende Beschleunigung zu errechnen. Der Rechner 32 ist im dargestellten Ausführungsbeispiel mit einer Speichereinrichtung 52 verbunden. Diese Verbindung ist durch den Pfeil 54 angedeutet. Desgleichen ist der Rechner 32 mit einem Komparator 56 versehen. Mit der Bezugsziffer 58 ist eine Anzeigeeinrichtung bezeichnet, die wie der Komparator 56 mit dem Rechner 32 verbunden ist. Die Verbindung des Komparators 56 mit dem Rechner 32 ist durch die Linie 60 und die Verbindung der Anzeigeeinrichtung 58 mit dem Rechner 32 ist durch die Linie 62 angedeutet.

Die Wirkungsweise der erfindungsgemässen Vorrichtung ist wie folgt: Zuerst wird eine Eichung durchgeführt. Zu diesem Zweck wird das Eichverfahren angewählt. Anschliessend wird die sog. Eichmasse abgefragt, d.h. die Masse der landwirtschaftlichen Zugmaschine mit der Eichladung. Daraufhin erfolgt an der Anzeigeeinrichtung 58 die Anzeige "Meßstrecke bei kleinster Strassengangabstufung anfahren; Handgas definiert einstellen". Nach der Rückmeldung der mit dem Handgas eingestellten definierten Drehzahl der landwirtschaftlichen Zugmaschine, die einem genau definierten Drehmomentbereich des Antriebsmotors innerhalb des Motorkennfeldes entspricht, wird an der Anzeigeeinrichtung die Anzeige "Auskuppeln" angezeigt. Der Lenker der landwirtschaftlichen Zugmaschine kuppelt also den Antriebsmotor aus, d.h. er drückt das Kupplungspedal 18 nieder, so dass die erste Schalteinrichtung 28 aktiviert wird. Das geschieht am Punkt 24 gemäss Figur 2, an dem die landwirtschaftliche Zugmaschine die Anfangsgeschwindigkeit $V_o$ besitzt. Mit der Ge schwindigkeitsmesseinrichtung 40 wird an diesem Punkt 24 die Anfangsgeschwindigkeit $V_o$ gemessen und das Messergebnis in den Rechner 32 eingegeben. Sobald die landwirtschaftliche Zugmaschine 10 eine bestimmte vorgegebene Endgeschwindigkeit $v_e$ erreicht hat, was in Figur 2 dem Punkt 26 entspricht, wird mit der Zeitmesseinrichtung 42 die Zeit gemessen und sowohl die dieser Zeit entsprechende Messgrösse als auch die Endgeschwindigkeit $v_e$ in den Rechner 32 eingegeben. Aus der Differenz $V_o - v_e$ und der in den Rechner 32 eingegebenen, der zuletzt genannten Zeit entsprechenden Messgrösse wird zur Berechnung der Beschleunigung der Quotient aus der Geschwindigkeitsdifferenz und der Zeit berechnet. Da die Endgeschwindigkeit $v_e$ kleiner ist als die Anfangsgeschwindigkeit $V_o$, wird eine negative Beschleunigung, d.h. eine Verzögerung berechnet.

Die beschriebene Messung wird also durch Niederdrücken des Kupplungspedals 18 mittels der ersten Schalteinrichtung 28 gestartet und durch Feststellung der vorgegebenen Endgeschwindigkeit $v_e$ am Punkt 26 (sh. Figur 2) beendet. Vorzugsweise beträgt die Endgeschwindigkeit $v_e$ 70% der Anfangsgeschwindigkeit $V_o$.

Sobald der Punkt 26 (sh. Figur 2) erreicht ist, erscheint auf der Anzeigeeinrichtung 58 der Befehl "Einkuppeln" und nach Rückmeldung der oben beschriebenen genau definierten Motordrehzahl das Kommando "Gaspedal - Vollast". Der Lenker der landwirtschaftlichen Zugmaschine drückt dann das Gaspedal 20 bis zum Vollgas nieder, wodurch die zweite Schalteinrichtung 30 aktiviert wird. Dabei wird die landwirtschaftliche Zugmaschine von $v_e$ bis $v_E$ (sh. Figur 2) beschleunigt. Der Wert $v_E$ liegt vorzugsweise um 30% über dem Anfangswert $V_o$ der Geschwindigkeit.

Während des zuletzt beschriebenen Eichverfahrens ist die Einrichtung 12 mit einer Eichladung 14 beladen. Der Rechner 32 errechnet dann aus der Formel

$$K = \frac{2 \cdot M_E \cdot (s - V_0 \cdot t)}{t^2} + b \cdot M_E$$

die Beschleunigungskraft K. In der zuletzt genannten Formel bedeuten

$M_E$ die Eichmasse der Ladung 14,

$s$ die Meßstrecke gem. Figur 2,

$V_0$ die Anfangsgeschwindigkeit,

$t$ die Zeit, und

$b$ die Beschleunigung der mit der Eichmasse versehenen landwirtschaftlichen Zugmaschine 10 in Fahrtrichtung.

Nach Durchführung dieser Eichung ist es möglich, das Gewicht einer beliebigen von der landwirtschaftlichen Zugmaschine 10 transportierten Ladung 14 zu messen. Zu diesem Zweck wird das Verfahren "Messung" angewählt. Dann wird die Abfrage "Leergewicht" durchgeführt. Bei dem Leergewicht handelt es sich um das Gewicht der Zugmaschine + Gewicht der leeren Einrichtung 12 zur Aufnahme einer Ladung 14. Nach dieser Abfrage erscheint auf der Anzeigeeinrichtung 58 die Anzeige "Anfahren der Meßstrecke bei kleinster Strassengangabstufung", wobei das Handgas wieder auf die oben beschriebene genau definierte Motordrehzahl eingestellt wird. Sobald die definierte Motordrehzahl erreicht ist, erscheint an der Anzeigeeinrichtung 58 der Befehl "Auskuppeln", wonach wiederum aus der Differenz $V_0 - v_e$ und der Zeit, die verstreicht, bis die Anfangsgeschwindigkeit $V_0$ bis zum vorgegebenen Wert. d.h. bis zur Endgeschwindigkeit $v_e$ abgenommen hat, bestimmt wird. Die Geschwindigkeitsdifferenz wird mit Hilfe der Geschwindigkeitsmesseinrichtung 40 und die zugehörige Zeitdifferenz bzw. Zeit t wird mittels der Zeitmesseinrichtung 42 bestimmt. Aus dem Quotienten der Geschwindigkeitsdifferenz und Zeit wird wiederum die Verzögerung der landwirtschafttlichen Zugmaschine 10 entlang der ersten Teilstrecke $s_1$ (sh. Figur 2) errechnet. Dazu dient der Rechner 32. Bei Erreichen des Punktes 26 gemäss Figur 2 wird mit der Anzeigeeinrichtung 58 das Kommando "Einkuppeln" angezeigt. Das bedeutet für den Lenker der landwirtschaftlichen Zugmaschine, dass er das Kupplungspedal 18 in die Ausgangs-bzw.Ruhestellung zurückstellt. Dabei wird die erste Schalteinrichtung 28 von der aktiven in die passive Stellung umgestellt. Sobald mit der Anzeigeeinrichtung 58 die genau definierte Motordrehzahl angezeigt wird, erscheint auf der Anzeigeeinrichtung 58 der Befehl "Fussgas Vollast", wonach der Lenker der landwirtschaftlichen Zugmaschine das Gaspedal 20 niederdrückt. Dabei wird die zweite Schalteinrichtung 30 aktiviert und mit der Vorrichtung 16 verbunden. Der Rechner 32 errechnet dann nach der Formel

$$M = \frac{K \cdot t^2}{2 \cdot (s - V_0 \cdot t) + b \cdot t^2} - m$$

die zu bestimmende Masse der Ladung 14, die mit der Gravitationskonstante g das Nettogewicht der Ladung 14 darstellt.

Ausser zur Bestimmung des Gewichtes einer von einer landwirtschaftli chen Zugmaschine transportierten Ladung kann das erfindungsgemässe Verfahren bzw.die erfindungsgemässe Vorrichtung zur Durchführung dieses Verfahrens auch zur überprüfung des Leistungszustandes der landwirtschaftlichen Zugmaschine verwendet werden. Im zuletzt genannten Fall wird die bei der Eichung errechnete Beschleunigungskraft der Zugmaschine in grösseren Zeitabständen mit jeweils gleicher transportierter Ladung festgestellt. Verändert sich unter derartigen gleichen Bedingungen,d.h. unter der Bedingung gleicher Ladung und gleichen Gewichtes der landwirtschaftlichen Zugmaschine die gemessene Zeit zum Zurücklegen der Meßstrecke s bzw. bei gleicher Zeit die Meßstrecke s, so bedeutet das eine entsprechende proportionale Veränderung der Leistung der landwirtschaftlichen Zugmaschine.

## Ansprüche

1. Verfahren zur Bestimmung des Gewichtes einer von einer landwirtschatlichen Zugmaschine transportierten Ladung,

**dadurch gekennzeichnet,**

dass die Zugmaschine zuerst mit einer Eichladung mit einer definierten Kraft beschleunigt und die Beschleunigung bestimmt wird. dass anschliessend die mit der zu transportierenden Ladung belastete Zugmaschine mit der gleichen definierten Kraft entsprechend beschleunigt und die Beschleunigung bestimmt wird, und dass die Masse der transportierten Ladung durch einen Vergleich der beiden Beschleunigungen bestimmt wird.

2. Verfahren nach Anspruch 1, **dadurch gekennzeichnet**, dass die beiden Beschleunigungen mit einem Beschleusensor bestimmt werden.

3. Verfahren nach Anspruch 1, **dadurch gekennzeichnet,** dass die beiden Beschleunigungen mit einer Geschwindigkeitsmesseinrichtung und mit einer Zeitmesseinrichtung gemessen werden.

4. Verfahren nach einem der vorhergehenden Ansprüche, **dadurch gekennzeichnet,** dass zur Eichung und gleichzeitig zur Berücksichtigung der Reibungseinflüsse die mit einer Eichladung versehene Zugmaschine zu erst bei einer vorgegebenenAnfangsgeschwindigkeit ($v_{EO}$) am Anfang einer Wegstrecke ($s_{EZ}$) ausgekuppelt wird, so dass sich infolge der Reibungseinflüsse eine Verzögerung $b_{ER}$) ergibt, die bestimmt wird, dass bei Erreichen einer vorgegebenen Mindestgeschwindigkeit wieder eingekuppelt und das Gaspedal auf Vollgas gestellt wird, dass die Zeit ($t_{EZ}$) bis zum Ende der Wegstrecke ($s_{EZ}$) bzw. bis zum Erreichen einer vorgegebenen Endgeschwindigkeit bestimmt wird, dass nach der Formel

$$K = \left( \frac{2\ (S_{EZ} - V_{EO} \cdot t_{EZ})}{t_{EZ}^2} + b_{ER} \right) \cdot m$$

die zum Beschleunigen der Zugmaschine erforderliche Kraft K errechnet wird, dass mit der zu bestimmenden tatsächlichen Ladung die gleichen Verfahrensschritte durchgeführt werden, wie mit der Eichladung (m), und dass die Masse (M) der Ladung nach der Formel

$$M = \frac{K \cdot t_{MZ}^2}{2\ (S_{MZ} - V_{MO} \cdot t_{MZ}) + b_{MR} \cdot t_{MZ}^2}$$

bestimmt wird, mit

K = Eichkraft, d.h. Kraft der mit der Eichladung versehenen Zugmaschine in einem bestimmten Drehzahlbereich,

$t_{MZ}$ = Zeit zum Durchlaufen der Wegstrecke $S_{MZ}$ der tatsächlichen Ladung

$S_{MZ}$ = Wegstrecke mit der tatsächlichen Ladung,

$V_{MZ}$ = Anfangsgeschwindigkeit mit der tatsächlichen Ladung,

$b_{MR}$ = Bremsverzögerung mit der tatsächlichen Ladung.

5. Verfahren nach Anspruch 4, **dadurch gekennzeichnet,** dass die Mindestgeschwindigkeit bei 70% und die Endgeschwindigkeit bei 130% der Anfangsgeschwindigkeit gewählt wird.

6. Verfahren zur Bestimmung des Gewichtes einer von einer landwirtschaftlichen Zugmaschine (10) transportierten Ladung (14), **dadurch gekennzeichnet,** dass mittels einer Kraftmesseinrichtung (36) die Beschleunigungskraft und mittels eines Beschleunigungssensors (38) die Beschleunigung der mit einer Eichladung ($M_E$) versehenen, die Leermasse (m) aufweisenden Zugmaschine (10) in Fahrtrichtung und anschliessend mittels der Kraftmesseinrichtung (36) die Beschleunigungskraft (K) und mittels des Beschleunigungssensors (38) die Beschleunigung (b) der mit der zu bestimmenden Ladung (14) versehenen Zugmaschine (10) in Fahrtrichtung gemessen wird.

7. Verfahren nach Anspruch 6, **dadurch gekennzeichnet,** dass die Beschleunigungskräfte und die Beschleunigungen entlang einer bestimmten Wegstrecke (s) gemessen werden.

8. Verfahren nach Anspruch 6 oder 7, **dadurch gekennzeichnet,** dass mit einer Geschwindigkeitsmesseinrichtung (40) die Geschwindigkeit ($V_o$) am Anfang und die Geschwindigkeit ($v_e$, $v_E$) am Ende der Wegstrecke (s) und mit einer Zeitmesseinrichtung (42), die zum Zurücklegen der Wegstrecke (s) erforderliche Zeit (t) mit der Eichladung ($M_E$) und mit der zu bestimmenden Ladung (M) gemessen wird, und dass die Masse (M) der zu bestimmenden Ladung mittels eines Rechners (32) nach der Formel

$$M = \frac{K \cdot t^2}{2 \cdot (s - V_o \cdot t) + b \cdot t^2} - m$$

berechnet wird.

9. Verfahren nach einem der Ansprüche 6 bis 8.**dadurch gekennzeichnet,** dass während eines ersten Teilabschhittes ($s_1$) der Wegstrecke (s) die Anfangsgeschwindigkeit ($V_o$) und die Endgeschwindigkeit ($v_e$) der Zugmaschine (10) gemessen wird, wobei der Antrieb der Zugmaschine (10) mittels einer ersten Schalteinrichtung (28) unwirksam gemacht wird und dass am Ende des ersten Teilabschnittes ($s_1$) der Wegstrecke (s) der Antrieb der Zugmaschine (10) aktiviert und eine zweite Schalteinrichtung (30) betätigt wird, mit der der Beschleunigungssensor (38) zur Messung der Beschleunigung (b) ausgelöst wird.

10.Verfahren nach einem der vorhergehenden Ansprüche, **dadurch gekennzeichnet,** dass die Ladung (M) der Zugmaschine (10) mit dem Rechner (32) während der Arbeitsbewegung der Zugmaschine (10) bestimmt wird.

11.Verfahren nach Anspruch 10, **dadurch gekennzeichnet,** dass der errechnete Wert der Ladung (M) der Zugmaschine (10) in einer Speichereinrichtung (52) abgespeichert wird.

12. Verfahren nach Anspruch 10, **dadurch gekennzeichnet,** dass der errechnete Wert der Ladung (M) der Zugmaschine (10) mit einer vorgegebenen Datei verglichen wird.

13. Vorrichtung zur Durchführung des Verfahrens nach einem der Ansprüche 1 bis 5, **dadurch gekennzeichnet,** dass eine Geschwindigkeitsmesseinrichtung und eine Zeitmesseinrichtung vorgesehen sind,und dass ein mit den elektrischenAusgangssignalen der Geschwindigkeitsmesseinrichtung und der Zeitmesseinrichtung zu beaufschlagender Rechner zur Berechnung der Masse (M) der Ladung der Zugmaschine vorgesehen ist.

14. Vorrichtung zur Durchführung des Verfahrens nach einem der Ansprüche 6 bis 12, **dadurch gekennzeichnet,** dass eine Kraftmesseinrichtung (36) zur Messung der Beschleunigungskraft in Fahrtrichtung, ein Beschleunigungssensor (38) zur Messung der Beschleunigung der Zugmaschine (10) in Fahrtrichtung und ein Rechner (32) zur Berechnung der Masse (M) der Ladung (14) aus der gemessenen Beschleunigungskraft und der gemessenen Beschleunigung in Fahrtrichtung vorgesehen sind.

15. Vorrichtung nach Anspruch 13 oder 14, **dadurch gekennzeichnet,** dass eine erste durch das Kupplungspedal (18) der Zugmaschine (10) betätigbare und eine zweite durch das Gaspedal (20) der Zugmaschine (10) betätigbare Schalteinrichtung (28; 30) vorgesehen sind, wobei die erste und die zweite Schalteinrichtung (28, 30) mit dem Rechner (32) verbunden sind.

Geänderte Patentansprüche gemäss Regel 86(2) EPC.

1. Verfahren zur Bestimmung des Gewichtes einer von einer landwirtschaflichen Zugmaschine transportierten Ladung,
**dadurch gekennzeichnet,**
dass die Zugmaschine zuerst mit einer Eichladung mit einer definierten Kraft beschleunigt und die Beschleunigung bestimmt wird, dass anschliessend die mit der zu transportierenden Ladung belastete Zugmaschine mit der gleichen definierten Kraft entsprechend beschleunigt und die Beschleunigung bestimmt wird, und dass die Masse der transportierten Ladung durch einen Vergleich der beiden Beschleunigungen bestimmt wird, wobei zur Eichung und gleichzeitig zur Berücksichtigung der Reibungseinflüsse die mit der Eichladung versehene Zugmaschine zuerst bei einer vorgegebenen Anfangsgeschwindigkeit ($v_{EO}$) am Anfang einer Wegstrecke ($s_{EZ}$) ausgekuppelt wird, so dass sich infolge der Reibungseinflüsse eine Verzögerung ($b_{ER}$) ergibt, die bestimmt wird, bei Erreichen einer vorgegebenen Mindestgeschwindigkeit wieder eingekuppelt und das Gaspedal auf Vollgas gestellt wird, die Zeit ($t_{EZ}$) bis zum Ende der Wegstrecke ($s_{EZ}$) bzw. bis zum Erreichen einer vorgegebenen Endgeschwindigkeit bestimmt wird, nach der Formel

$$K = \left( \frac{2 \ (S_{EZ} - V_{E0} \cdot t_{EZ})}{t_{EZ}^2} + b_{ER} \right) \cdot m$$

die zum Beschleunigen der Zugmaschine erforderliche Kraft K errechnet wird, mit der zu bestimmenden tatsächlichen Ladung die gleichen Verfahrensschritte durchgeführt werden, wie mit der Eichladung (m), und die Masse (M) der Ladung nach der Formel

$$M = \frac{K \cdot t_{MZ}^2}{2 \ (S_{MZ} - V_{MO} \cdot t_{MZ}) + b_{MR} \cdot t_{MZ}^2}$$

bestimmt wird, mit

K = Eichkraft, d.h. Kraft der mit der Eichladung versehenen Zugmaschine in einem bestimmten Drehzahlbereich,

$t_{MZ}$ = Zeit zum Durchlaufen der Wegstrecke $S_{MZ}$ der tatsächlichen Ladung

$S_{MZ}$ = Wegstrecke mit der tatsächlichen Ladung,

$V_{MZ}$ = Anfangsgeschwindigkeit mit der tatsächlichen Ladung,

$b_{MR}$ = Bremsverzögerung mit der tatsächlichen Ladung.

2. Verfahren nach Anspruch 1, dadurch gekennzeichnet, dass die Mindestgeschwindigkeit bei 70% und die Endgeschwindigkeit bei 130% der Anfangsgeschwindigkeit gewählt wird.

3. Verfahren zur Bestimmung des Gewichtes einer von einer landwirtschaftlichen Zugmaschine (10) transportierten Ladung (14), dadurch gekennzeichnet, dass mittels einer Kraftmesseinrichtung (36) die Beschleunigungskraft und mittels eines Beschleunigungssensors (38) die Beschleu nigung der mit einer Eichladung ($M_E$) versehenen, die Leermasse (m) aufweisenden Zugmaschine (10) in Fahrtrichtung und anschliessend mittels der Kraftmesseinrichtung (36) die Beschleunigungskraft (K) und mittels des Beschleunigungssensors (38) die Beschleunigung (b) der mit der zu bestimmenden Ladung (14) versehenen Zugmaschine (10) in Fahrtrichtung gemessen wird, wobei die Beschleunigungskräfte und die Beschleunigungen entlang einer bestimmten Wegstrecke (s) gemessen werden, mit einer Geschwindigkeitsmesseinrichtung (40) die Geschwindigkeit ($V_o$) am Anfang und die Geschwindigkeit ($v_e$, $v_E$) am Ende der Wegstrecke (s) und mit einer Zeitmesseinrichtung (42), die zum Zurücklegen der Wegstrecke (s) erforderliche Zeit (t) mit der Eichladung ($M_E$) und mit der zu bestimmenden Ladung (M) gemessen wird, und die Masse (M) der zu bestimmenden Ladung mittels eines Rechners (32) nach der Formel

$$M = \frac{K \cdot t^2}{2 \cdot (s - V_o \cdot t) + b \cdot t^2} - m$$

berechnet wird.

4. Verfahren nach Anspruch 3, dadurch gekennzeichnet, dass während eines ersten Teilabschnittes ($s_1$) der Wegstrecke (s) die Anfangsgeschwindigkeit ($V_o$) und die Endgeschwindigkeit ($v_e$) der Zugmaschine (10) gemessen wird, wobei der Antrieb der Zugmaschine (10) mittels einer ersten Schalteinrichtung (28) unwirksam gemacht wird und dass am Ende des ersten Teilabschnittes ($s_1$) der Wegstrecke (s) der Antrieb der Zugmaschine (10) aktiviert und eine zweite Schalteinrichtung (30) betätigt wird, mit der der Beschleunigungssensor (38) zur Messung der Beschleunigung (b) ausgelöst wird.

5. Verfahren nach einem der vorhergehenden Ansprüche, dadurch gekennzeichnet, dass die Ladung (M) der Zugmaschine (10) mit dem Rechner (32) während der Arbeitsbewegung der Zugmaschine (10) bestimmt und der errechnete Wert der Ladung (M) in einer Speichereinrichtung (52) abgespeichert wird.

6. Verfahren nach Anspruch 5, dadurch gekennzeichnet, dass der errechnete Wert der Ladung (M) der Zugmaschine (10) mit einer vorgegebenen Datei verglichen wird.

7. Vorrichtung zur Durchführung des Verfahrens nach Anspruch 1 oder 2, ddurch gekennzeichnet, dass eine Geschwindigkeitsmesseinrichtung und eine Zeitmesseinrichtung vorgesehen sind, und dass ein mit den elektrischen Ausgangssignalen der Geschwindigkeitsmesseinrichtung und der Zeitmesseinrichtung zu beaufschlagender Rechner zur Berechnung der Masse (M) der Ladung der Zugmaschine vorgesehen ist.

8. Vorrichtung zur Durchführung des Verfahrens nach einem der Ansprüche 3 bis 6, dadurch gekennzeichnet, dass eine Kraftmesseinrichtung (36) zur Messung der Beschleunigungskraft in Fahrtrichtung, ein Beschleunigungssensor (38) zur Messung der Beschleunigung der Zugmaschine (10) in Fahrtrichtung und ein Rechner (32) zur Berechnung der Masse (M) der Ladung (14) aus der gemessenen Beschleunigungskraft und der gemessenen Beschleunigung in Fahrtrichtung vorgesehen sind.

9. Vorrichtung nach Anspruch 7 oder 8, dadurch gekennzeichnet, dass eine erste durch das Kupplungspedal (18) der Zugmaschine (10) betätigbare und eine zweite durch das Gaspedal (20) der Zugmaschine (10) betätigbare Schalteinrichtung (28, 30) vorgesehen sind, wobei die erste und die zweite Schalteinrichtung (28, 30) mit dem Rechner (32) verbunden sind.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 111 636 (WABCO WESTINGHOUSE FAHRZEUGBREMSEN) * Insgesamt * --- | 1,3,6, 10,13, 14 | G 01 G 19/12 G 01 G 19/03 G 01 G 9/00 |
| A | GB-A-2 162 955 (DAIMLER-BENZ AG) * Seite 1, Zeilen 1-65 * --- | 1,3,10, 13 | |
| A | PATENT ABSTRACTS OF JAPAN, Band 8, Nr. 175 (P-294)[1612], 11. August 1984; & JP-A-59 70 919 (KIYATAPIRAA MITSUBISHI K.K.) 21-04-1984 * Zusammenfassung; Figur * ----- | 1,2,10 | |

|  | RECHERCHIERTE SACHGEBIETE (Int. Cl.4) |
|---|---|
|  | G 01 G B 60 P |

Der vorliegende Recherchenbericht wurde für alle Patentansprüche erstellt

| Recherchenort | Abschlußdatum der Recherche | Prüfer |
|---|---|---|
| DEN HAAG | 17-12-1987 | ROSE A.R.P. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................
& : Mitglied der gleichen Patentfamilie, übereinstimmendes
    Dokument